# EUROPÄISCHE PATENTSCHRIFT

(11) **EP 1 697 186 B1**
(45) Veröffentlichungstag und Bekanntmachung des Hinweises auf die Patenterteilung: **17.02.2010**
(21) Anmeldenummer: 04803561.2
(22) Anmeldetag: 06.12.2004
(51) Int. Cl.: B60T 7/10, B60T 13/74

(54) **FESTSTELLBREMSE UND VERFAHREN ZUR STEUERUNG DERSELBEN**
PARKING BRAKE AND METHOD FOR CONTROLLING THE SAME
FREIN DE STATIONNEMENT ET PROCEDE DE COMMANDE CORRESPONDANT

(30) Priorität: 23.12.2003 DE 10361042
(43) Veröffentlichungstag der Anmeldung: 06.09.2006
(73) Patentinhaber: Lucas Automotive GmbH, 56070 Koblenz (DE)
(72) Erfinder: ERBEN, Ralf, 56132 Kemmenau (DE); KINDER, Ralf, 56337 Eitelborn (DE); LEITER, Ralf, 56743 Mendig (DE); POERTZGEN, Gregor, 56068 Koblenz (DE)
(74) Vertreter: Röthinger, Rainer
(86) Internationale Anmeldenummer: PCT/EP2004/013864
(87) Internationale Veröffentlichungsnummer: WO 2005/063535

(56) Entgegenhaltungen:
- EP-A- 1 498 633
- US-A- 5 417 624
- US-B1- 6 249 737

## Beschreibung

### Gebiet der Erfindung

Die Erfindung betrifft eine Feststellbremse. Insbesondere betrifft die Erfindung eine elektrisch betätigbare Feststellbremse.

### Hintergrund der Erfindung

Aus der EP 0 729 871 A1 ist eine Fahrzeugbremse bekannt, bei der ein Reibbelag mittels eines Bremskolbens gegen eine Bremsscheibe gepresst werden kann. Hierzu wird bei Betriebsbremsungen in üblicher Weise Hydraulikfluid unter Druck in eine Hydraulikkammer eingeleitet, deren eine Begrenzungswand durch den Bremskolben gebildet ist. Der Druck in der Hydraulikkammer führt dann zur Verschiebung des Bremskolbens und damit des Reibbelags in Richtung auf die Bremsscheibe. Diese bekannte Fahrzeugbremse ist nicht nur als Betriebsbremse, sondern darüber hinaus auch als Feststellbremse - auch Parkbremse genannt - verwendbar. Dazu weist sie eine elektrisch betätigbare Spindel/Mutter-Anordnung zum mechanischen Feststellen des Bremskolbens in einem Zustand auf, in dem der Reibbelag sich in Eingriff mit der Bremsscheibe befindet.

Außerdem sind Bremsanordnungen bekannt, bei denen anstelle der hydraulischen Betätigung ein elektrischer Antrieb (auch) bei Betriebsbremsungen die Verschiebung des Bremskolbens und damit des Reibbelags in Richtung auf die Bremsscheibe und davon weg bewirkt. Beispielsweise verzichtet die elektromechanische Bremse der DE 102 12 612 A1 völlig auf eine hydraulische Übertragung der Betätigungskraft. Eine vom Fahrer aufgebrachte Pedalkraft wird erfasst und als elektrisches Signal an ein Steuergerät übertragen. Dieses dosiert nach Auswertung verschiedener weiterer Sensor-Signale (z. B. Betriebsparameter der Bremse) die Bremskraft.

Als eine der Messgrößen zum Einstellen der Zuspannkraft bei elektrisch betätigbaren Feststellbremsen wird die Stromaufnahme des Elektromotors verwendet. Als Abschaltstrom wird die Größe der Stromaufnahme des Elektromotors bezeichnet, bei der eine gewünschte Zuspannkraft in den Bremssätteln erreicht ist - der Elektromotor schaltet bei Erreichen dieses Stroms ab. Ein selbstsperrendes Getriebe oder andere Mittel bewirken, dass trotz Abschaltens des Elektromotors die erreichte Zuspannkraft aufrechterhalten bleibt.

Die US 5,417,624 betrifft eine Betätigungseinrichtung für eine Feststellbremse eines Motorfahrzeuges. Ein Elektromotor kann beispielsweise durch eine elektronische Steuerungseinrichtung automatisch ausgeschaltet werden, falls der Motorstrom einen vorbestimmten Wert überschreitet oder falls er sich über einen gewissen Zeitraum nicht gedreht hat. Für diesen Zweck müssen bekannte Sensoren bereitgestellt werden, die den Motorstrom und die Motordrehzahl messen. Durch Variieren des Motorstromgrenzwertes ist es folglich auf eine einfache Weise möglich, spezielle Betriebszustände zu berücksichtigen.

Die US 6,249,737 B1 betrifft eine Feststellbremse für Personenkraftwagen mit einer Einstelleinheit zum Anziehen und Lösen des Steuerkabels für eine Bremseinrichtung. Durch Überwachen des Betriebsstroms eines Elektromotors und des Drehwinkels eines Zahnrades kann ein Hinweis auf die Bremskraft bereitgestellt werden.

Aufgabe der Erfindung ist es, eine elektrische Feststellbremse derart zu steuern, dass eine erhöhte Betriebssicherheit und eine komfortable Bedienung gewährleistet ist.

### Zusammenfassung der Erfindung

Die Aufgabe wird durch ein Verfahren nach Anspruch 1 und eine elektronische Einheit nach Anspruch 12 gelöst.

Es wird allgemein ein Verfahren zur Steuerung einer Feststellbremse mit einem auf eine oder mehrere Bremsbacken wirkenden und einen Elektromotor umfassenden Bremsaktuator beschrieben, bei dem zum Kompensieren von Zuspannkraftänderungen ein Abschaltstrom des Elektromotors variiert wird. Umfasst das Steuerungsverfahren der Feststellbremse einen Regelalgorithmus, kann der jeweils einzustellende Soll-Abschaltstrom variiert werden.

Zur Überwachung von mechanischen und elektronischen Bauteilen werden vorzugsweise Systemparameter des Elektromotors und/oder des Bremssystems und/oder äußere Einflussfaktoren erfasst. Darauf basierend erfolgt eine Kompensation von Zuspannkraftänderungen. Zweckmäßigerweise wird der Abschaltstrom zur Kompensation eines Wirkungsgradabfalls bei der Klemmkrafterzeugung allmählich erhöht. So kann eine stufenweise Erhöhung des Abschaltstroms, z. B. nach einer vorbestimmten Ereigniszahl, erfolgen. Bei einer weiteren Ausführungsform kann der Abschaltstrom kontinuierlich erhöht werden.

Um einen Wirkungsgradabfall der mechanischen Komponenten eines Bremsaktuators z. B. infolge von Materialermüdung und Abnutzung zu kompensieren, wird bei einer Ausführungsform der Erfindung die Größe des Abschaltstroms des Elektromotors zum Erzielen einer vorbestimmten Zuspannkraft angepasst. Durch ein Mitzählen beispielsweise der Betätigungszyklen der Bremse (oder anderer Ereignisse wie dem Anhalten oder dem Abschließen des Fahrzeugs) und einem darauf basierenden Anpassen des Abschaltstroms, kann der Wirkungsgradabfall korrigiert werden. Dazu kann mit Hilfe eines Ereigniszählers das Erreichen einer vorbestimmten Ereigniszahl überwacht und beim Erreichen dieser Zahl eine Maßnahme zur Anpassung der Abschaltstromaufnahme eingeleitet werden.

Des Weiteren kann eine Widerstandsänderung des Elektromotors bei der Anpassung des Abschaltstroms berücksichtigt werden, um die gewünschte Zuspannkraft zu erzielen.

Bei einer Ausführungsform der Erfindung wird bei der Abschaltstromanpassung die Temperatur des Elektromotors berücksichtigt, die Rückschlüsse auf eine Widerstandsänderung des Elektromotors zulässt. Der Abschaltstrom kann dann entsprechend der Temperatur - bzw. Widerstandsänderung variiert werden. Eine mögliche Methode, um Rückschlüsse auf die Temperatur des Elektromotors zu erhalten, ist die Ermittlung der Bremsscheibentemperatur, die Rückschlüsse auch auf die Widerstandsänderung des Elektromotors zulässt. Eine weitere Möglichkeit, die Temperatur des Elektromotors zu bestimmen, ist das Ermitteln der Zahl der Bremsbetätigungen innerhalb eines bestimmten Zeitintervalls. Daraus lässt sich auf eine Eigenerwärmung des Motors schließen, die wiederum einen Einfluss auf den elektrischen Widerstand des Elektromotors hat und somit bei der Ermittlung des Abschaltstroms berücksichtigt werden kann.

Bei einer weiteren Ausführungsform ist vorgesehen, die Temperaturänderung des Elektromotors durch Auswerten einer Leerlaufdrehzahl und/oder einer Betriebsspannung zu ermitteln. Da die Betriebsspannung in der Regel annähernd konstant bleibt, kann anhand einer erhöhten Leerlaufdrehzahl auf eine Temperaturerhöhung und damit einen sinkenden Widerstand des Elektromotors geschlossen werden, was wiederum zu einer Abschaltstromanpassung führen kann. Bei einer weiteren vorteilhaften Ausführungsform werden durch die Erfindung ferner Spannungsschwankungen im Bordnetz eines Fahrzeugs bei der Änderung des Abschaltstroms berücksichtigt.

Ferner kann auch eine Leerlaufstromänderung des Elektromotors bei der Anpassung des Abschaltstroms berücksichtigt werden. Um Änderungen der Zuspannkraft, die auf eine beispielsweise temperaturbedingte Leerlaufstromänderung zurückgehen, zu kompensieren, wäre es denkbar, den Abschaltstrom in eine Leerlaufstromkomponente und in eine zur tatsächlichen Zuspannkrafterzeugung verwendete Stromaufnahmekomponente zu trennen. Die Einstellung der Zuspannkraft kann dann auf der Grundlage der Stromaufnahmekomponente erfolgen, während die Leerlaufstromkomponente unberücksichtigt bleibt.

Die elektronische Steuereinheit der Erfindung lässt eine getrennte oder gemeinsame Ansteuerung der Bremsaktuatoren unterschiedlicher Räder des Fahrzeugs zu. Dabei verarbeitet die Steuereinheit vorteilhafterweise empfangene Sensorsignale, verknüpft diese gegebenenfalls mit Daten anderer Sensoren und Regelsysteme und errechnet für jeden Radaktuator separat oder für alle Radaktuatoren gemeinsam den erforderlichen Abschaltstrom zum Erreichen einer vorbestimmten Zuspannkraft.

Durch Auswerten von Größen wie der Außen- oder Scheibentemperatur, des Bremsdruckes, sowie mittels eines Rechts-Links-Vergleichs der Aktuatoren lassen sich Abweichungen des nominellen Leerlaufstroms des Elektromotors erkennen. Derartige Abweichungen können bei der Anpassung des Abschaltstroms berücksichtigt werden. Ferner gestattet das Erfassen solcher Abweichungen Rückschlüsse auf Fehler der mechanischen Komponenten im System. Derartige Fehler werden bei einer bevorzugten Ausführungsform der Erfindung dem Fahrer oder einem Diagnosesystem angezeigt, was z.B. einen rechtzeitigen Austausch der defekten Teile ermöglicht. Zusätzlich wird dadurch der Fahrkomfort und die Fahr- und Verkehrssicherheit verbessert.

Die Erfindung betrifft ferner eine elektronische Einheit zur Steuerung eines auf eine oder mehrere Bremsbacken wirkenden und einen Elektromotor umfassenden Bremsaktuators einer Feststellbremse. Die elektronische Steuereinheit ist ausgebildet, um z.B. alterungs- oder verschleißbedingte Zuspannkraftänderungen oder Zuspannkraftänderungen aufgrund von z.B. Widerstandsänderungen und/oder Temperaturänderungen des Elektromotors durch Variation des Abschaltstroms des Elektromotors zu kompensieren. Vorzugsweise wird bei der Einstellung der Zuspannkraft darauf verzichtet, das Signal eines Kraftsensors auszuwerten. Mit anderen Worten, die Feststellbremse benötigt keinen Kraftsensor.

Die in der Steuereinheit zur Steuereinheit benötigten Informationen werden über Sensoren abgegriffen. So können beispielsweise Temperatur, Zeit, elektrische Größen und/oder Ereigniszahlen mittels der Sensoren ermittelt und anschließend über ein Bussystem der elektronischen Steuerungseinheit zugeführt werden.

Vorteilhaft ist es, wenn zum Ablegen der Werte der Sensoren mehrere Speicherbereiche in der elektronischen Steuerungseinheit vorgesehen sind. Dabei kann zwischen einem Speicherbereich für aktuelle Werte und einem Speicherbereich für vordefinierte Werte unterschieden werden. Der Speicherbereich für vordefinierte Werte enthält zweckmäßigerweise Referenzwerte, die dem Vergleich mit und/oder der Berechnung von aktuellen Werten dienen.

### Figurenbeschreibung

Weitere Vorteile, Merkmale und Abwandlungen der Erfindung sind unter Bezugnahme auf die Zeichnungen nachstehend erläutert.
Figur 1 zeigt eine schematische Längsschnittdarstellung einer elektrisch betätigbaren Feststellbremse gemäß der Erfindung in Form einer Scheibenbremse.
Figur 2 stellt in einem Flussdiagramm vereinfacht die wesentlichen Schritte zur Durchführung eines Korrekturverfahrens gemäß der vorliegenden Erfindung dar.
Figur 3 zeigt Wirkungsgradkennlinien, die die Abhängigkeit des Zuspannmoments von der Betätigungszahl eines Aktuators der Feststellbremse darstellen.
Figur 4 stellt in einem Flussdiagramm beispielhaft Verfahrensschritte einer weiteren Ausführungsform gemäß der vorliegenden Erfindung dar, bei der Einflüsse als Folge mechanischer Abnutzung und Materialermüdung berücksichtigt werden.
Figur 5 stellt in einem Flussdiagramm beispielhaft Verfahrensschritte einer weiteren Ausführungsform des erfindungsgemäßen Verfahrens dar, bei der ebenfalls Einflüsse als Folge mechanischer Abnutzung und Materialermüdung berücksichtigt werden
Figur 6 stellt in einem Flussdiagramm beispielhaft Verfahrensschritte einer weiteren Ausführungsform gemäß der vorliegenden Erfindung zur Ermittlung eines Abschaltstroms in Abhängigkeit eines Widerstands eines Elektromotors beziehungsweise einer Temperatur dar.
Figuren 7 und 8 stellen in jeweils einem Flussdiagramm beispielhaft Verfahrensschritte einer weiteren Ausführungsform des erfindungsgemäßen Verfahrens zur Bestimmung der Temperatur eines Elektromotors dar.

### Detaillierte Figurenbeschreibung

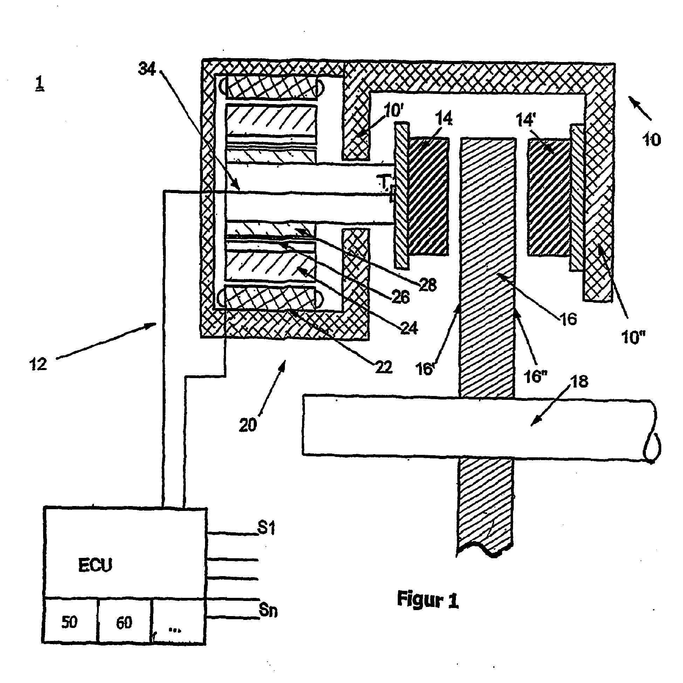

Fig. 1 zeigt eine elektrisch betätigbare Fahrzeugbremse 1, die im Längsschnitt einen im Wesentlichen U-förmigen Bremssattel 10 sowie eine an dem Bremssattel 10 angeordnete elektrische Betätigungseinheit, einen Aktuator 12, aufweist. In dem Bremssattel 10 sind an dessen beiden Schenkeln 10', 10" zwei (in nicht weiter veranschaulichten Führungen aufgenommene) Reibbeläge 14, 14' angeordnet. Die beiden Reibbeläge 14, 14' sind zu beiden Seiten einer von dem Bremssattel 10 übergriffenen Bremsscheibe 16 angeordnet und wirken mit jeweils einer Seitenfläche 16', 16" der Bremsscheibe 16 zusammen. Die Bremsscheibe 16 ist drehfest mit einem (nur teilweise gezeigten) Achsstummel 18 des Kraftfahrzeuges verbunden. Die Reibbeläge 14, 14' sind im Bremssattel 10 auf die Bremsscheibe 16 hin bzw. von ihr weg verschiebbar angeordnet. Bei der gezeigten Ausführungsform handelt es sich um eine sogenannte Schwimmsattelanordnung, bei der einer der Reibbeläge 14 durch den Aktuator 12 direkt und der andere Reibbelag 14' durch die Wirkung einer vom Bremssattel 10 aufgebrachten Reaktionskraft mit der Bremsscheibe 16 in Reibungseingriff gebracht werden kann.

Der Aktuator 12 ist seitlich am Bremssattel 10 angesetzt und weist einen Elektromotor 20 auf, der mit einem Bremskolben 34 zusammenwirkt. Der Bremskolben 34 ragt durch den Elektromotor 20 hindurch bis zu dem Reibbelag 14. Der Elektromotor 20 ist in der gezeigten Ausführungsform ein Innenläufermotor mit einem am Gehäuse fest angeordneten Stator 22 und einem umlaufenden Rotor 24. Im Innern des Rotors 24 ist eine Innenverzahnung 26 angeordnet, die eine Drehung des Rotors 24 auf einen Kranz 28 mit einer Außenverzahnung übertragen kann, der drehfest aber axial verschiebbar auf dem Bremskolben 34 angeordnet ist. Dieses nach Art einer Mutter/Spindelanordung arbeitende Getriebe 26, 28 hat eine relativ hohe Untersetzung. Das Getriebe 26, 28 dient dazu, die Drehbewegung des Elektromotors 20 in eine Längsbewegung des Bremskolbens 34 zur Betätigung der Reibbeläge 14, 14' umzusetzen.

Die in Fig. 1 dargestellte Fahrzeugbremse 1 lässt sich sowohl in einem Betriebsbremsmodus als auch als Feststellbremse verwenden. Nachfolgend wird die Verwendung der Fahrzeugbremse 1 als Feststellbremse näher betrachtet.

Insbesondere beim Abstellen des Fahrzeugs oder beim Anfahren auf einer geneigten Fahrbahnoberfläche wird von der Feststellfunktionalität der Fahrzeugbremse 1 Gebrauch gemacht. Hierbei wird von der elektrischen Steuereinheit ECU der Elektromotor 20 angesteuert, um zum Erzeugen einer Zuspannkraft die Reibbeläge 14, 14' in Anlage an die Bremsscheibe 16 zu bringen. Mit zunehmender Zuspannkraft steigt die Stromaufnahme des Elektromotors 20 an. Es wird herkömmlicherweise und insbesondere bei kraftsensorlosen Fahrzeugbremsen davon ausgegangen, dass eine vorbestimmte Zuspannkraft erreicht ist (und der Elektromotor 20 daher abgeschaltet werden kann), wenn die Stromaufnahme des Elektromotors 20 einen vorbestimmten Wert, den Abschaltstrom J, erreicht hat. Bei Erreichen des Abschaltstroms J unterbindet die elektronische Steuereinheit ECU den Stromfluss zum Elektromotor 20 und schaltet diesen damit ab. Aufgrund der selbstsperrenden Eigenschaften des Getriebes 26, 28 bleibt die erzeugte Zuspannkraft aufrechterhalten. Zum Abbau der Zuspannkraft ist es daher erforderlich, den Elektromotor 20 in einer zur Zuspanndrehrichtung umgekehrten Drehrichtung zu betreiben.

Der Elektromotor 20 ist gemäß Fig. 1 über entsprechende Leitungen mit der elektronischen Steuereinheit ECU zur Erzeugung der Ansteuersignale für den Elektromotor 20 verbunden. Da die elektronische Steuereinheit (ECU) den Abschaltstrom J für den Elektromotor 20 regelt, kann die elektronische Steuereinheit ECU auch den funktionellen Zusammenhang zwischen der einzustellenden Zuspannkraft und der Stromaufnahme des Elektromotors 20 beeinflussen.

Außerdem werden von ebenfalls im oder am Kraftfahrzeug vorhandenen Sensoren S1, ..., Sn für Betriebszustände des Kraftfahrzeuges repräsentative Signale an die elektronische Steuereinheit ECU geschickt. Zu den erfassten Betriebszuständen gehören beispielsweise die Betätigungszahl der Feststellbremse, die Temperatur der Bremsscheibe 16, die Temperatur des Elektromotors 20, die Leerlaufdrehzahl des Elektromotors 20 sowie, falls gewünscht, äußere Einflussfaktoren.

Die elektronische Steuereinheit ECU weist einen oder mehrere erste Speicherplätze 50 auf, in denen aktuelle Messwerte abgelegt werden, die von den Sensoren S1, .., Sn ermittelt werden, und einen oder mehrere zweite Speicherplätze 60, um vordefinierte Vergleichswerte/Referenzwerte darin abzuspeichern. Die Vergleichswerte können funktionelle Zusammenhänge vorbestimmter Größen sein, die Messwertgrößen der Sensoren beinhalten. Sie können in Form von Kennlinien, Tabellen, vorbestimmten Werten oder Funktionen abgespeichert sein, welche Messwertgrößen der Sensoren S1, ..., Sn und Abschaltstromwerte in Verbindung setzen. Es ist denkbar, im Speicherbereich der elektronischen Steuereinheit ECU auch Toleranzbereiche für die eben erwähnten Werte abzuspeichern.

Bei einem Ausführungsbeispiel der vorliegenden Erfindung greift die elektronische Steuereinheit ECU zur Kompensation einer Änderung der Zuspannkraft auf eine im Vergleichswertspeicher 60 der elektronischen Steuereinheit ECU abgelegten Kennlinie oder Tabelle zu und bestimmt für einen aktuellen Eingangswert (z. B. die Betätigungszahl) einen Korrekturwert des Abschaltstroms J zur Kompensation von Zuspannkraftänderungen.

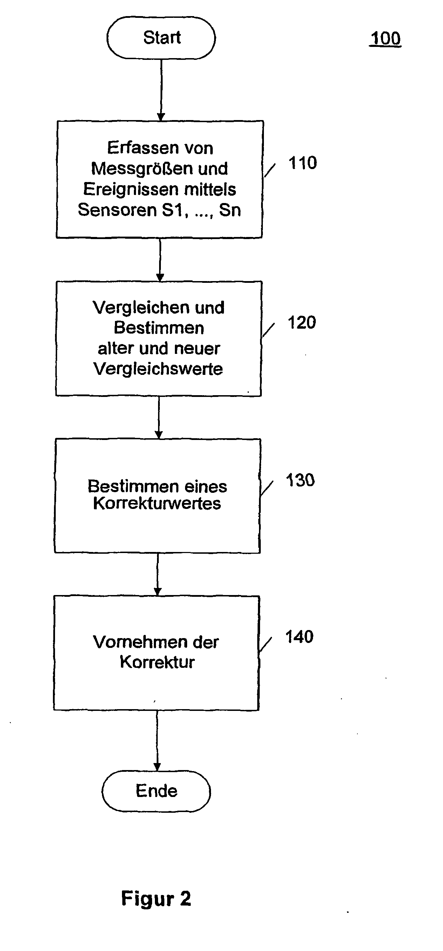

Figur 2 veranschaulicht allgemein die Verfahrensschritte, die zur Ermittlung der Korrekturwerte gemäß der vorliegende Erfindung durchzuführen sind. Es wird davon ausgegangen, dass im Speicher für Vergleichswerte 60 der elektronischen Steuereinheit ECU vorbestimmte Werte, Funktionen oder Kennlinien bereits abgelegt sind. Es kann erforderlich sein, dass Vergleichswerte im Speicher 60 aktualisiert oder geändert werden müssen. Beispielsweise kann der ursprüngliche Soll-Abschaltstrom J mit dem um einen Korrekturwert geänderten Wert des Abschaltstroms J kontinuierlich ersetzt werden.

Der erste Schritt zur Einleitung der allgemein mit 100 bezeichneten Verfahrensschritte ist das Erfassen von Werten 110 (z. B. Messwerten oder Ereignissen) mittels der Sensoren S1, ..., Sn. Die erfassten Werte werden in dem Speicher für aktuelle Werte 50 der elektronischen Steuereinheit ECU abgelegt 110. In Schritt 120 werden dann die erfassten Werte mit den Vergleichswerten aus dem Speicher 60 der elektronischen Steuereinheit ECU verglichen und/oder als Eingangswerte für die Bestimmung von Korrekturwerten in Schritt 130 mittels z. B. der abgelegten Funktionen oder Kennlinien verwendet. Der darauf folgende Schritt 140 besteht in dem Vornehmen einer Korrektur des Abschaltstroms J.

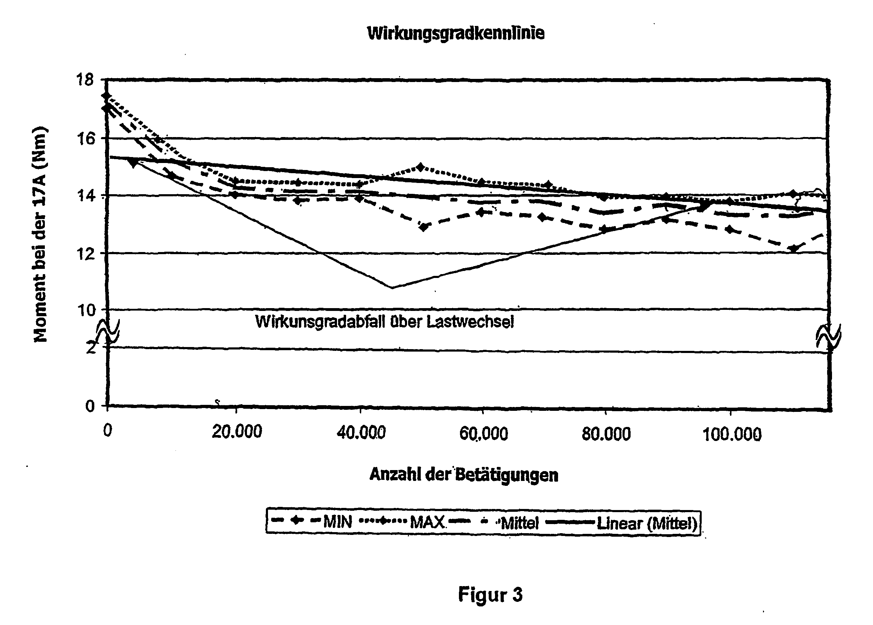

Figur 3 zeigt ein Diagramm, das die Kennlinie eines Wirkungsgradabfalls des Aktuators 12 als Funktion der Anzahl der Betätigungen der Feststellbremse darstellt. Es hat sich in der Praxis gezeigt, dass der Wirkungsgrad des Aktuators 12 mit der Anzahl der Betätigungszyklen aufgrund der dadurch bedingten Materialermüdung der mechanischen Komponenten ungefähr linear abnimmt. Wie im Diagramm veranschaulicht, fällt nach 80.000 Betätigungen die Zuspannkraft bei gleichbleibendem Abschaltstrom (17 A) von 17 kN auf 14 kN ab.

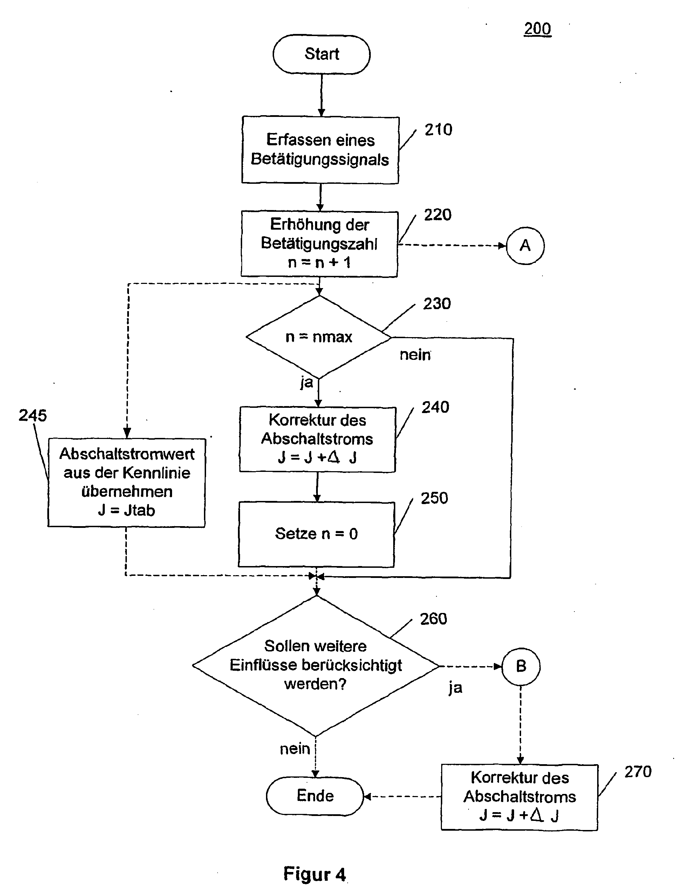

Figur 4 zeigt ein Flussdiagramm 200, das eine Abschaltstromanpassung gemäß einer Ausführungsform der Erfindung veranschaulicht, bei der Einflüsse in Folge mechanischer Abnutzung und Materialermüdung berücksichtigt werden. Dazu wird in einem ersten Schritt eine Betätigung der Feststellbremse mittels eines Sensors S1, ..., Sn erfasst 210. Anschließend wird in einem zweiten Schritt 220 ein Betätigungszähler der elektronischen Steuerungseinheit ECU inkrementiert. Es wird also eine Betätigungszahl n aus dem Speicher 50 für aktuelle Werte der elektronischen Steuerungseinheit ECU abgerufen, um 1 erhöht und als neuer aktueller Wert n=n+1 in den Speicher 50 der elektronischen Steuerungseinheit ECU zurückgeschrieben.

Bei einer folgenden Abfrage 230 wird der inkrementierte Wert der Betätigungszahl n mit einem voreingestellten Wert nmax aus dem Speicher 60 der elektronischen Steuerungseinheit verglichen. Ist der inkrementierte Wert n kleiner als der voreingestellte Wert nmax, erfolgt keine Korrektur des Abschaltstroms J.

Sobald aber die Betätigungszahl n den Wert nmax erreicht, führt dies in einem weiteren Schritt 240 zu einer Anpassung des Abschaltstroms J des Elektromotors 20 des Aktuators 12. Beispielsweise wird ein bestimmter Abschalt-Stromwert J nach nmax=1000 Betätigungen um eine kompensierende Größe ΔJ, die im Speicher 60 für vorbestimmte Werte abgelegt ist, erhöht. Die Betätigungszahl n wird anschließend in einem weiteren Schritt 250 wieder auf Null gesetzt.

Die unter Bezugnahme auf Fig. 4 erläuterte Ausführungsform der Erfindung basiert auf einer stufenweisen Anhebung des Abschaltstroms J nach einer konstanten Betätigungszahl nmax um ΔJ. Diese Art der Kompensationskorrektur eignet sich besonders für lineare funktionelle Zusammenhänge.

Bei einer weiteren Ausführungsform der Erfindung können insbesondere nicht linear verlaufende Kennlinien berücksichtigt werden, indem nach einer vorbestimmten Betätigungszahl nmax der neue Wert des Abschaltstroms J=Jtab einer im Speicher 60 hinterlegten Kennlinie oder Tabelle entnommen wird 245. Dies ist in der Figur 4 mittels gestrichelter Linien und mittels des Schritts 245 dargestellt. In diesem Fall entfällt die Bestimmung des Abschaltstroms J nach Schritt 240. Bei der alternativen Ausführungsform kann auch Schritt 250 entfallen, da der Wert des Abschaltstroms Jtab direkt als Funktion der aktuellen Betätigungszahl n aus einer vordefinierten Kennlinie oder Tabelle des Speichers 60 entnommen werden kann.

Als weitere ergänzende Alternative für eine genauere erfindungsgemäße Bestimmung des Abschaltstromes J wurde das Flussdiagramm um die Möglichkeit einer Feinregulierung 260, 270 ergänzt - hier auch nur mit einer gestrichelten Linie im Flussdiagramm 200 angedeutet. Dabei kann der in Schritt 240 oder 245 bestimmte Wert des Abschaltstroms J um einen weitere Einflüsse berücksichtigenden Korrekturfaktor ΔJ korrigiert werden. Beispielsweise können die von den Sensoren der Feststellbremse S1, ..., Sn erfassten Kenngrößen wie Temperatur und Widerstand des Elektromotors 20 bei der Abschaltstromanpassung berücksichtigt werden.

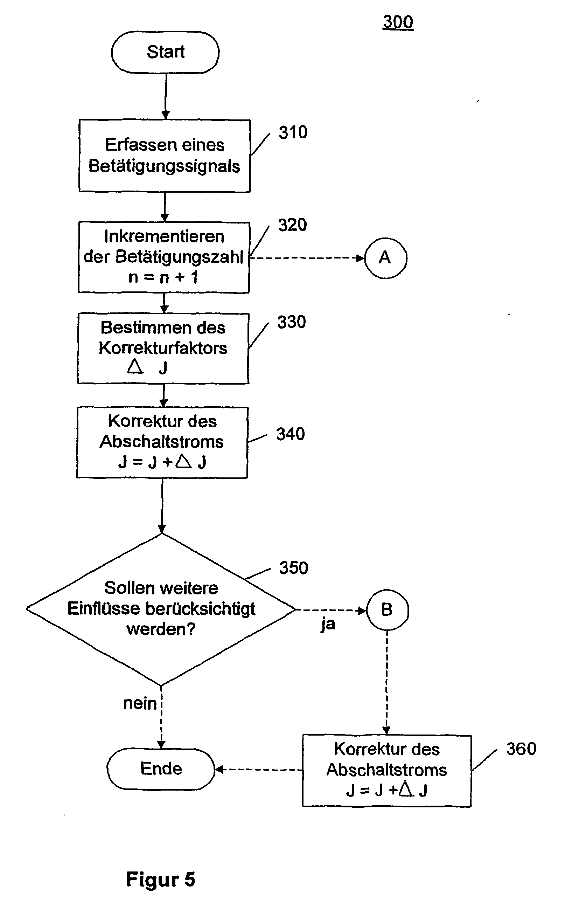

Figur 5 veranschaulicht in einem Flussdiagram 300 eine weitere Ausführungsform des erfindungsgemäßen Verfahrens. Die Betätigungszahl n wird bei dieser Ausführungsform nicht wie in Schritt 250 gemäß Figur 4 wieder auf Null gesetzt, sondern nach Erfassen des Betätigungssignals 310 ständig weiter inkrementiert 320. Entsprechend dazu kann dann ein korrigierender Abschaltstrom ΔJ mit Hilfe einer in dem Speicher 60 der elektronischen Steuerungseinheit ECU hinterlegten Funktion oder Tabelle in Schritt 330 errechnet/bestimmt werden. Im nächsten Schritt 340 wird dann die Anpassung des Abschaltstroms J vorgenommen.

Zusätzlich zu den offenbarten Möglichkeiten lassen sich zur genaueren Korrektur des Abschaltstroms J in den Schritten 350, 360 noch weitere Anpassungen vornehmen.

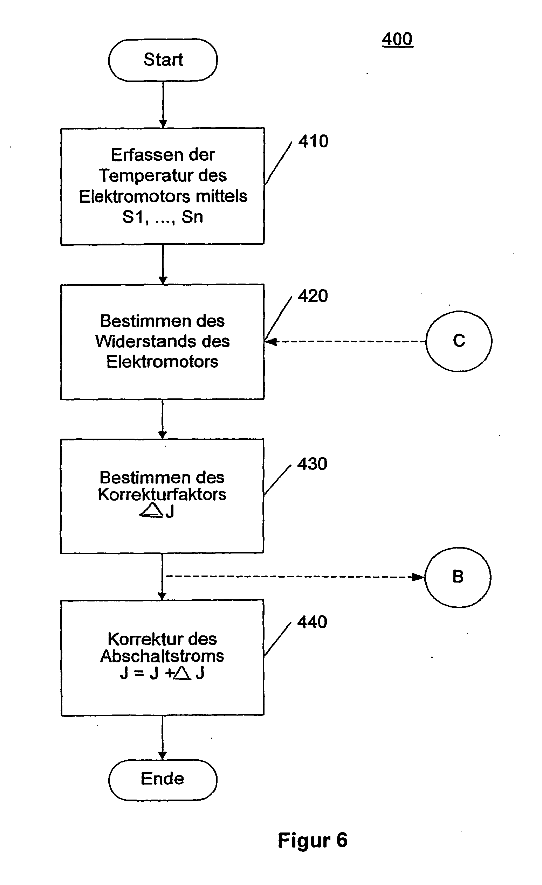

Figur 6 zeigt beispielhaft ein Flussdiagramm 400, in dem die erfindungsgemäßen Schritte zur Ermittlung eines korrigierten Abschaltstroms J bzw. eines korrigierenden Anteils ΔJ in Abhängigkeit des Widerstands des Elektromotors 20 beziehungsweise dessen Temperatur dargestellt sind. Dabei wird in einem ersten Schritt 410 die Temperatur T des Elektromotors 20 erfasst. Dies kann mittels eines Sensors S1, ..., Sn geschehen, der die Temperatur des Elektromotors 20 an die elektronische Steuerungseinheit ECU leitet.

Anhand der in dem Speicher 60 der elektronischen Steuerungseinheit ECU hinterlegten Referenzwerte kann über die erfasste Temperaturinformation in einem weiteren Schritt 420 auf den sich einstellenden Widerstand des Elektromotors 20 geschlossen werden. Auf der Grundlage des Widerstandes des Elektromotors 20 wird dann ein Korrekturfaktor ΔJ zur Kompensation des Abschaltstroms J in Schritt 430 derart bestimmt, dass eine vorbestimmte Zuspannkraft erzielt wird. In dem darauf folgenden Schritt 440 kann dann der Abchaltstromwert J um den in Schritt 430 ermittelten Wert ΔJ korrigiert werden.

Der ermittelte Korrekturfaktor ΔJ kann separat aber auch zusätzlich zu weiteren Korrekturfaktoren ΔJ des Abschaltstroms J berücksichtigt werden. Dies ist in Figur 6 mittels der Schnittstelle B und der gestrichelten Linie dargestellt ist. Zum besseren Verständnis sollte dazu die Figur 6 im Zusammenhang mit Figur 4 und 5 betrachtet werden.

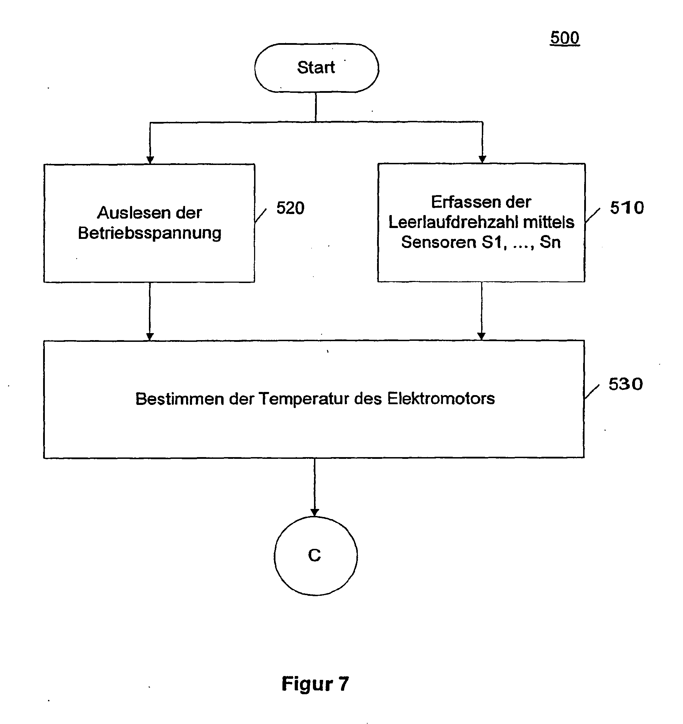

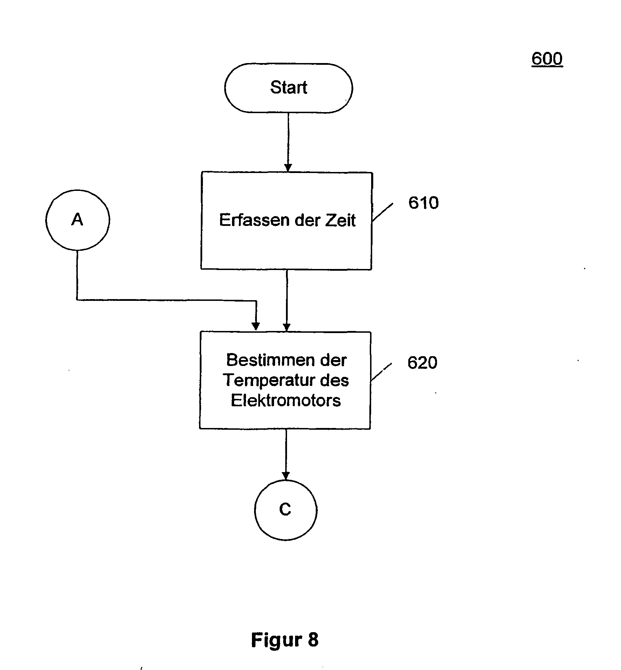

Bei einer weiteren Ausführungsform kann die Temperatur des Elektromotors 20 auch eine innerhalb der elektronischen Steuerungseinheit ECU abgeleitete Größe sein (vgl. auch Figur 7 und 8), die der Temperatur des Elektromotors 20 entspricht und über eine Schnittstelle C zur weiteren Verarbeitung dem Schritt 420 zugeführt werden kann; hier mittels einer gestrichelten Linie dargestellt.

Das Flussdiagramm 500 in Figur 7 zeigt, wie bei einer weiteren Ausführungsform der Erfindung die Temperatur des Elektromotors 20 aus einer im Speicher 60 der elektronischen Steuerungseinheit ECU hinterlegten oder gemessenen Betriebsspannung und einer mittels eines Sensors S1, ..., Sn ermittelten Leerlaufdrehzahl bestimmt wird.

Es wurden beispielsweise bei einer Motorentemperatur von 20°C 11790 U/min und bei 100°C 13680 U/min gemessen. Wenn man die Betriebsspannung als konstant betrachtet, kann anhand der erhöhten Leerlaufdrehzahl ein Zusammenhang zur Motortemperaturerhöhung hergestellt werden, die wiederum auf eine Widerstandsänderung des Elektromotors 20 schließen lässt und in weiterer Folge die Bestimmung eines Korrekturwertes ΔJ in Schritt 430 in Figur 5 ermöglicht. Dabei wird in Schritt 510 die Leerlaufdrehzahl mittels eines Sensors S1, ..., Sn erfasst und zusammen mit dem aus dem Speicher 60 gelesenen oder gemessenen Betriebsspannungswert, Schritt 520, an Schritt 530 weiter geleitet. In Schritt 530 werden die beiden Werte zum Bestimmen der Temperatur des Elektromotors 20 verarbeitet. Über eine Schnittstelle C werden die Temperaturinformationen dann Schritt 420 in Figur 6 zugeführt. Die weitere Verarbeitung erfolgt dann gemäß Flussdiagramm 400 in Figur 6.

In Figur 8 ist eine weitere Ausführungsform des erfindungsgemäßen Verfahrens zur Bestimmung der Temperatur des Elektromotors 20 in einem Flussdiagramm 600 dargestellt. Dabei wird anhand der Anzahl n der Betätigungen der Feststellbremse innerhalb eines vorbestimmten Zeitabschnitts auf eine Eigenerwärmung des Elektromotors 20 geschlossen (ΔT beträgt typischerweise 5° C pro Betätigung). Zu diesem Zweck werden in der elektronischen Steuerungseinheit ECU in Schritt 610 zusätzlich noch Zeitinformationen erfasst. Ferner werden mittels eines Zählers die Bremsbetätigungen n gezählt. Diese Informationen können von demselben Betätigungszähler, wie in Figur 3 und 4 erläutert, bereitgestellt bzw. aus dem Speicher 50 für aktuelle Werte ausgelesen werden. Diese Werte können dann über eine Schnittstelle A dem Verfahrensschritt 620 zugeführt werden. In dem Verfahrensschritt 620 wird dann die Temperaturberechnung durchgeführt. Mittels einer Schnittstelle C werden die Temperaturinformationen dann Schritt 410 in Figur 6 zugeführt. Die nachstehende Verarbeitung der Temperaturinformationen erfolgt dann gemäß Flussdiagramm 400 in Figur 4.

Selbstverständlich wird der Fachmann durch die oben nur beispielhaft aufgeführten Ausführungsformen dazu angeregt, die einzelnen Steuerungsparameter des Verfahrens wie Temperatur und Widerstand des Elektromotors 20 sowie die Betätigungszahl n miteinander zu kombinieren.

## Patentansprüche

1. Verfahren zur Steuerung einer Feststellbremse (1) mit einem auf eine oder mehrere Bremsbacken (14, 14') wirkenden und einen Elektromotor (20) umfassenden Bremsaktuator (12), **dadurch gekennzeichnet, dass**
- eine Stromaufnahme des Elektromotors (20) als eine Messgröße zum Einstellen einer Zuspannkraft verwendet wird; wobei
- zum Einstellen einer vorbestimmten Zuspannkraft im Zusammenhang mit der Kompensation eines Wirkungsabfalls Zuspannkraftänderungen durch Variieren der Größe eines Abschaltstroms (J) des Elektromotors (20) entgegengewirkt wird.

2. Verfahren nach Anspruch 1, **dadurch gekennzeichnet, dass** zum Ermitteln von Zuspannkraftänderungen ein Ereignis gezählt und der Abschaltstrom (J) in Abhängigkeit einer Ereigniszahl (n) variiert wird.

3. Verfahren nach Anspruch 1 und 2, **dadurch gekennzeichnet, dass** ein Erreichen einer vorbestimmten Ereigniszahl (nmax) ermittelt wird und bei Erreichen der Ereigniszahl (n=nmax) eine Maßnahme zur Änderung des Abschaltstroms (J) des Elektromotors (20) ausgelöst wird.

4. Verfahren nach Anspruch 2 oder 3, **dadurch gekennzeichnet, dass** die gezählten Ereignisse die Betätigung der Bremse, das Anhalten des Fahrzeugs und/oder das Abschließen des Fahrzeugs sind.

5. Verfahren nach einem der Ansprüche 1 bis 4, **dadurch gekennzeichnet, dass** beim Variieren des Abschaltstroms (J) eine Widerstandsänderung des Elektromotors (20) berücksichtigt wird.

6. Verfahren nach Anspruch 5, **dadurch gekennzeichnet, dass** Rückschlüsse auf die Widerstandsänderung des Elektromotors (20) in Abhängigkeit der Temperatur des Elektromotors (20), der Temperatur der Bremsscheibe (16), der Anzahl der Betätigungen der Bremse innerhalb eines vorbestimmten Zeitintervalls, der Leerlaufdrehzahl des Elektromotors und/oder der Betriebsspannung gezogen werden.

7. Verfahren nach einem der obigen Ansprüche 1 bis 6, **dadurch gekennzeichnet, dass** beim Variieren des Abschaltstroms (J) eine Leerlaufstromänderung des Elektromotors (20) berücksichtigt wird.

8. Verfahren nach einem der obigen Ansprüche 1 bis 7, **dadurch gekennzeichnet, dass** der Abschaltstrom (J) des Elektromotors (20) in eine Leerlaufstromkomponente und eine Stromaufnahmekomponente zur Spannkrafterzeugung getrennt wird und die Leerlaufstromkomponente bei Entscheidungen bezüglich des Abschaltens des Elektromotors (20) nicht berücksichtigt wird.

9. Verfahren nach einem der obigen Ansprüche 1 bis 8, **dadurch gekennzeichnet, dass** der Abschaltstrom (J) des Elektromotors (20) in Abhängigkeit von Betriebsspannungswankungen eines Bordnetzes variiert wird.

10. Verfahren nach einem der obigen Ansprüche 1 bis 9, **dadurch gekennzeichnet, dass** der Abschaltstrom (J) stufenweise oder kontinuierlich erhöht wird.

11. Verfahren nach einem der obigen Ansprüche 1 bis 10, **dadurch gekennzeichnet, dass**, wenn ein von einem Toleranzbereich vordefinierter Kenngrößen (S1, ..., Sn), die einen Rückschluss auf Leeriaufstromänderungen gestatten, abweichender Wert erfasst wird, ein Diagnose- oder Warnsignal abgegeben wird.

12. Elektronische Einheit zur Steuerung eines auf eine oder mehrere Bremsbacken (14, 14') wirkenden und einen Elektromotor (20) umfassenden Bremsaktuators (12) einer Feststellbremse (1), **dadurch gekennzeichnet, dass** die elektronische Steuereinheit (ECU) ausgebildet ist, um eine Stromaufnahme des Elektromotors (20) als Messgröße zum Einstellen einer Zuspannkraft zu verwenden und zum Einstellen einer vorbestimmten Zuspannkraft im Zusammenhang mit der Kompensation eines Wirkungsgradabfalls Zuspannkraftänderungen durch Variation eines Abschaltstroms (J) des Elektromotors (20) entgegenzuwirken.

13. Steuereinheit gemäß Anspruch 12, **dadurch gekennzeichnet, dass** die elektronische Steuerungseinheit (ECU) mit Sensoren (S1, ..., Sn) zur Erfassung von Temperatur, Zeit, elektrischen Größen und/oder Anzahl von bestimmten Ereignissen (n) gekoppelt ist und den Abschaltstrom (J) in Abhängigkeit der Ausgangssignale eines oder mehrer der Sensoren (S1, ..., Sn) variiert.

14. Steuereinheit nach einem der obigen Ansprüche 12 oder 13, **dadurch gekennzeichnet, dass** die Steuereinheit (ECU) einen ersten Speicherbereich (50) aufweist, in dem die aktuelle Größe oder Sollgröße des Abschaltstroms (J) abgelegt ist.

15. Steuereinheit nach Anspruch 13 oder 14, **dadurch gekennzeichnet, dass** in dem ersten oder einem zweiten Speicherbereich (50) aktuelle Sensorwerte (S1, ..., Sn) gespeichert sind und in einem weiteren Speicherbereich (60) vordefinierte Referenzwerte der Kenngrößen (S1, ..., Sn) des Bremsaktuators (12) abgelegt sind.

16. Feststellbremse mit einer Steuereinheit gemäß einem der Ansprüche 12 bis 15.

## Claims

1. A method for controlling a parking brake (1) having a brake actuator (12) that acts on one or more brake shoe(s) (14, 14') and comprises an electric motor (20), **characterised in that**
- a current drain of the electric motor (20) is used as a measured value for adjusting an application force; wherein
- for adjusting a predetermined application force in the context of compensating a reduction in efficiency, changes in application force are countered by varying the magnitude of a cut-off current (J) of the electric motor (20).

2. The method according to claim 1, **characterised in that** to determine changes in the application force, an event is counted and the cutoff current (J) is varied depending on an event number (n).

3. The method according to claim 1 and 2, **characterised in that** attainment of a predetermined event number (nmax) is determined and on attainment of the event number (n = nmax) a measure for changing the cutoff current (J) of the electric motor (20) is triggered.

4. The method according to claim 2 or 3, **characterised in that** the counted events are actuation of the brake, stopping of the vehicle and/or locking of the vehicle.

5. The method according to any one of claims 1 to 4, **characterised in that** a change in the resistance of the electric motor (20) is taken into account when varying the cutoff current (J).

6. The method according to claim 5, **characterised in that** conclusions about the change in the resistance of the electric motor (20) are drawn depending on the temperature of the electric motor (20), the temperature of the brake disc (16), the number of actuations of the brake within a predetermined time interval, the idling speed of the electric motor and/or the operating voltage.

7. The method according to any one of the above claims 1 to 6, **characterised in that** a change in the idling current of the electric motor (20) is taken into account when varying the cutoff current (J).

8. The method according to any one of the above claims 1 to 7, **characterised in that** the cutoff current (J) of the electric motor (20) is divided in an idling current component and a current consumption component for generating application force, and that the idling current component is not taken into account in decisions relating to stopping of the electric motor (20).

9. The method according to any one of the above claims 1 to 8, **characterised in that** the cutoff current (J) of the electric motor (20) is varied depending on variations in the operating voltage of an on-board electrical system.

10. The method according to any one of the above claims 1 to 9, **characterised in that** the cutoff current (J) is increased step-wise or continuously.

11. The method according to any one of the above claims 1 to 10, **characterised in that** if a value is measured that deviates from a tolerance range of predefined parameters (S1, ..., Sn) that allow a conclusion to be drawn about changes in idling current, a diagnosis or warning signal is emitted.

12. An electronic unit for controlling a brake actuator (12) of a parking brake (1), which acts on one or more brake shoe(s) (14, 14') and comprises an electric motor (20), **characterised in that** the electronic control unit (ECU) is constructed to use a current drain of the electric motor (20) as a measured value for adjusting an application force, and to adjust a predetermined application force in the context of compensating a reduction in efficiency by countering changes in application force by varying the cut-off current (J) of the electric motor (20).

13. The control unit according to claim 12, **characterised in that** the electronic control unit (ECU) is coupled to sensors (S1, ..., Sn) for detecting temperature, time, electrical variables and/or the number of specific events (n), and varies the cutoff current (J) depending on the output signals of one or more of the sensor(s) (S1, ..., Sn).

14. The control unit according to any one of the above claims 12 or 13, **characterised in that** the control unit (ECU) comprises a first memory portion (50) in which the actual value or set value of the cutoff current (J) is stored.

15. The control unit according to claim 13 or 14, **characterised in that** actual sensor values (S1, ..., Sn) are stored in the first memory portion in a second memory portion (50) and predefined reference values of the parameters (S1, ..., Sn) of the brake actuator (12) are stored in a further memory portion (60).

16. A parking brake comprising a control unit according to any one of claims 12 to 15.

## Revendications

1. Procédé permettant d'assurer la commande d'un frein de stationnement (1) muni d'un actionneur de frein (12) agissant sur une ou plusieurs mâchoires de frein (14, 14') et comprenant un moteur électrique (20), **caractérisé en ce que**
- une consommation de courant du moteur électrique (20) est utilisée comme grandeur de mesure pour le réglage d'une force d'application du frein ;
- les variations de la force d'application du frein étant, pour régler une force d'application prédéterminée en rapport avec la compensation d'une baisse d'efficacité, contrecarrées par la variation de la grandeur d'un courant de rupture (J) du moteur électrique (20).

2. Procédé selon la revendication 1, **caractérisé en ce que**, pour détecter des variations de la force d'application du frein, un événement est compté et le courant de rupture (J) est modulé en fonction d'un nombre d'événements (n).

3. Procédé selon la revendication 1 et 2, **caractérisé en ce qu'**il est détecté une atteinte d'un nombre d'événements prédéterminé (nmax) et déclenché une mesure visant la modification du courant de rupture (J) du moteur électrique (20) lors de l'atteinte dudit nombre d'événements (n=nmax).

4. Procédé selon la revendication 2 ou 3, **caractérisé en ce que** les événements dénombrés consistent en l'actionnement du frein, l'arrêt du véhicule et/ou le verrouillage du véhicule.

5. Procédé selon l'une des revendications 1 à 4, **caractérisé en ce qu'**une modification de la résistance du moteur électrique (20) est prise en compte lors de la variation du courant de rupture (J).

6. Procédé selon la revendication 5, **caractérisé en ce qu'**il est tiré des conclusions sont tirées de la modification de la résistance du moteur électrique (20) en fonction de la température du moteur électrique (20), de la température du disque de frein (16), du nombre d'actionnements du frein en l'espace d'un intervalle de temps prédéterminé, du régime à vide du moteur électrique et/ou de la tension de service.

7. Procédé selon l'une des revendications 1 à 6, **caractérisé en ce qu'**une modification du courant à vide du moteur électrique (20) est prise en compte lors de la variation du courant de rupture (J).

8. Procédé selon l'une des revendications 1 à 7, **caractérisé en ce que** le courant de rupture (J) du moteur électrique (20) est séparé en une composante de courant à vide et en une composante de consommation de courant pour la production de la force d'application du frein, et la composante de courant à vide n'est pas prise en compte lors des décisions concernant la mise hors circuit du moteur électrique (20).

9. Procédé selon l'une des revendications 1 à 8, **caractérisé en ce que** le courant de rupture (J) du moteur électrique (20) est modulé en fonction des variations de la tension de service d'un réseau de bord.

10. Procédé selon l'une des revendications 1 à 9,
**caractérisé en ce que** le courant de rupture (J) est augmenté graduellement ou de manière continue.

11. Procédé selon l'une des revendications 1 à 10, **caractérisé en ce qu'**un signal de diagnostic ou d'avertissement est émis lorsqu'est saisie une valeur s'écartant des valeurs caractéristiques (S1, ..., Sn) prédéfinies dans une plage de tolérance lesquelles permettent de tirer une conclusion des modifications du courant à vide.

12. Unité électronique permettant d'assurer la commande d'un actionneur de frein (12) d'un frein de stationnement (1) agissant sur une ou plusieurs mâchoires de frein (14, 14') et comprenant un moteur électrique (20), **caractérisée en ce que** l'unité de commande électronique (ECU) est conçue pour utiliser une consommation de courant du moteur électrique (20) comme grandeur de mesure pour le réglage d'une force d'application du frein et pour contrecarrer les variations de la force d'application du frein par la variation de la grandeur d'un courant de rupture (J) du moteur électrique (20) pour le réglage d'une force d'application du frein prédéterminée en rapport avec la compensation d'une baisse d'efficacité.

13. Unité électronique selon la revendication 12, **caractérisée en ce que** l'unité de commande électronique (ECU) est couplée à des capteurs (S1, ..., Sn) pour capter la température, la durée, les grandeurs électriques et/ou le nombre d'événements déterminés (n), et le courant de rupture (J) modulé en fonction des signaux de sortie d'un ou de plusieurs capteurs (S1, ..., Sn).

14. Unité électronique selon l'une des revendications 12 ou 13, **caractérisée en ce que** l'unité de commande électronique (ECU) présente une première zone de mémoire (50) dans laquelle est archivée la grandeur momentanée ou la valeur théorique du courant de rupture (J).

15. Unité électronique selon la revendication 13 ou 14, **caractérisée en ce que** les valeurs momentanées captées (S1, ..., Sn) sont mémorisées dans la première ou dans une seconde zone de mémoire (50), et les valeurs de référence prédéfinies pour les grandeurs caractéristiques (S1, ..., Sn) de l'actionneur de frein (12) sont archivées dans une zone de mémoire supplémentaire (60).

16. Frein de stationnement muni d'une unité de commande selon l'une des revendications 12 à 15.
